# EUROPÄISCHE PATENTSCHRIFT

(11) **EP 0 404 726 B1**
(45) Veröffentlichungstag und Bekanntmachung des Hinweises auf die Patenterteilung: **11.08.1993**
(21) Anmeldenummer: 90810439.1
(22) Anmeldetag: 15.06.1990
(51) Int. Cl.: F16B 7/04

(54) **Vorrichtung zum Verbinden von C-förmigen Schienen, insbesondere Montageschienen**
Device for connecting c-shaped rails, especially mounting rails
Dispositif pour la connexion de rails en forme de C, en particulier rails de montage

(30) Priorität: 20.06.1989 CH 2289/89
(43) Veröffentlichungstag der Anmeldung: 27.12.1990
(73) Patentinhaber: Geberit AG, CH-8645 Jona (CH)
(72) Erfinder: Lechner, Peter, CH-8645 Jona (CH)
(74) Vertreter: Groner, Manfred

(56) Entgegenhaltungen:
- EP-A- 0 284 122
- CH-A- 507 455
- CH-A- 667 121
- DE-A- 2 232 737
- DE-A- 2 448 858
- DE-A- 3 410 499
- FR-A- 2 333 096

## Beschreibung

Die Erfindung betrifft eine Verbindung nach dem Oberbegriff des unabhängigen Patentanspruchs 1.

Durch die CH-A-667 121 der Anmelderin ist eine Verbindung dieser Art für die Vorwandmontage von Sanitärapparaten bekannt geworden. Diese weist zwei Blechplatten auf, die miteinander verschraubt sind und deren Enden jeweils in eine Montageschiene eingreifen. Diese Blechplatten müssen bei der Montage bezüglich der Schienen genau ausgerichtet werden, was schwierig sein kann.

Der Erfindung liegt die Aufgabe zugrunde, eine Verbindung der genannten Art zu schaffen, die eine einfachere und schnellere Montage ermöglicht und die dennoch eine stabile Befestigung auch schwerer Sanitärapparate und Armaturen ermöglicht. Die Aufgabe ist durch die Erfindung gemäss Anspruch 1 gelöst. Die Verbindungsstücke können mit einer einfachen und kurzen Bewegung in der gewünschten Position mit den Schienen verbunden werden. Eine zeitaufwendige Verschiebung dieser Teile in Längsrichtung der Schienen ist nicht notwendig. Ein Vorteil der erfindungsgemässen Verbindung wird darin gesehen, dass die Verbindungsstücke aus Kunststoff hergestellt werden können. Solche Verbindungsstücke übertragen den Körperschall wesentlich weniger als entsprechende Teile aus Metall.

Die Verbindung kannn besonders schnell und einfach hergestellt werden, wenn die Verbindungsstücke Rastzungen aufweisen, die mit entsprechenden Rastflächen in den Schienen zusammenarbeiten.

Eine besonders stabile Verbindung ergibt sich dann, wenn in die Schienen Verankerungsorgane eingesetzt sind, die flächig auf den Innenseiten der Schienen abgestützt sind.

Eine stabile Verbindung ohne solche Organe ist dann ebenfalls möglich, wenn die Verbindungsstücke spreizbare Teile aufweisen.

Nach einer Weiterbildung der Erfindung weisen Verbindungsstücke ineinandergreifende Riffelungen sowie eine Klammer auf, die zusammen mit den Riffelungen die Verbindungsstücke zusammen hält. Eine solche Verbindung kann besonders einfach und ohne Werkzeuge auf den Abstand der beiden Schienen eingestellt werden. Weitere vorteilhafte Weiterbildungen ergeben sich aus den übrigen abhängigen Ansprüchen und der nachfolgenden Beschreibung.

Zwei Ausführungsbeispiele der Erfindung werden nachfolgend anhand der Zeichnungen näher erläutert. Es zeigen:
- Fig. 1: eine perspektivische Ansicht der erfindungsgemässen Verbindung, wobei lediglich ein Verbindungsstück mit einer Schiene verbunden ist,
- Fig. 2: eine Ansicht eines Verankerungsorgans,
- Fig. 3: ein Schnitt durch das Verankerungsorgan entlang der Linie III-III in Fig. 2,
- Fig. 4: eine Teilansicht einer erfindungsgemässen Verbindung nach einer Variante, wobei die Verbindung mit der Schiene nicht vollständig ist, und
- Fig. 5: eine Teilansicht gemäss Fig. 4, wobei hier die Verbindung hergestellt ist.

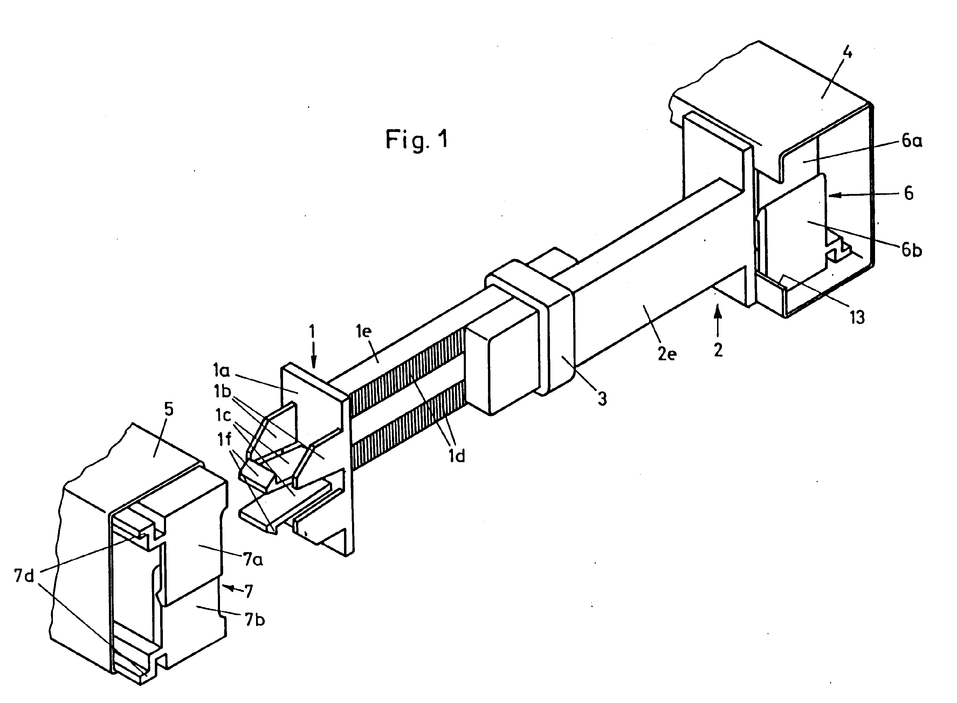

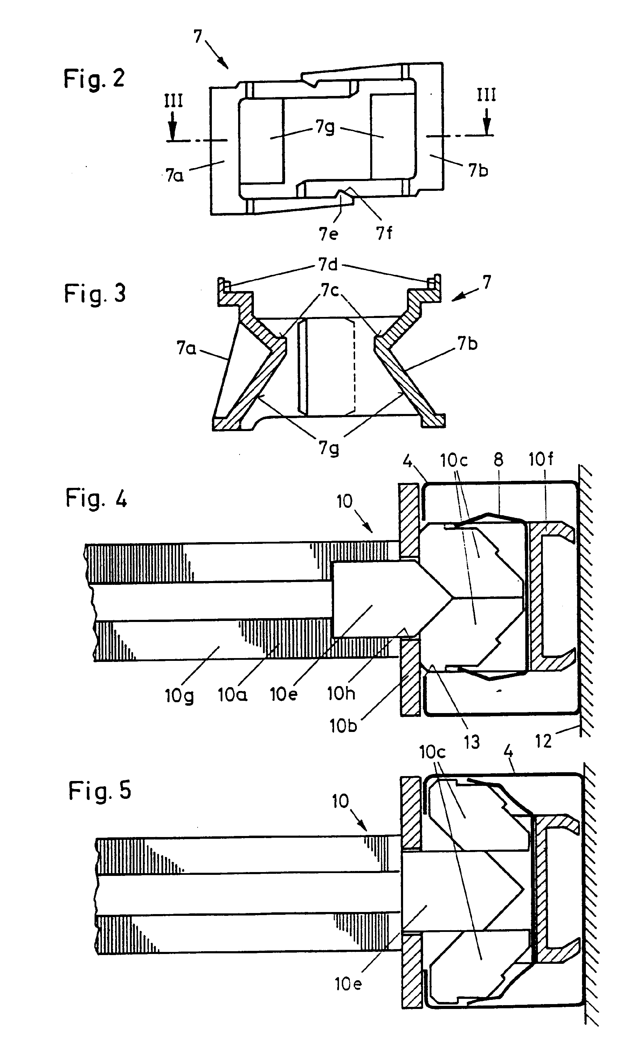

Die in den Fig. 1 bis 3 dargestellte Verbindung weist zwei Verbindungsstücke 1 und 2 auf, die einstückig aus Kunststoff hergestellt sind. Diese Verbindungsstücke 1 und 2 sind mit einer Metallklammer 3 lösbar miteinander verbunden und weisen jeweils am freien Ende zwei federnde Rastzungen 1c auf, die mit entsprechenden Rastflächen 7c (Fig. 3) auf der Innenseite eines Verankerungsorgans 6 bzw. 7 zusammenarbeiten. Wie die Fig. 1 zeigt, ist jedes Organ 6 bzw. 7 in eine Montageschiene 4 bzw. 5 eingesetzt. Die parallel zueinander verlaufenden Schienen 4 und 5 besitzen einen Längsschlitz und dienen insbesondere zur Befestigung von Verkleidungsplatten. In der Regel ist eine der Schienen 4 bzw. 5 an einer Gebäudewand befestigt. Die im Querschnitt C-förmigen Schienen 4 und 5 verlaufen in der Regel horizontal oder vertikal und sind in der Regel durch mehrere erfindungsgemässe Vorrichtungen miteinander verbunden.

Die beiden Verbindungsstücke 1 und 2 und auch die Verankerungsorgane 6 und 7 sind völlig gleich ausgebildet.

Wie die Fig. 2 und 3 zeigen bestehen die Verankerungsorgane jeweils aus zwei separat gefertigten Teilen 7a und 7b, die lose durch den Schlitz 13 in die Schiene 4 bzw. 5 eingesetzt werden können. In der Schiene werden die Teile 7a und 7b zueinander verschoben, bis Rastnasen 7e und Rastnuten 7f ineinandergreifen und die beiden Teile 7a und 7b zusammenhalten, wie dies in den Fig. 2 und 3 gezeigt ist. Wesentlich ist, dass das nun etwa quaderförmige Verankerungsorgan 7 allseitig an der Innenseite der Schienen abgestützt ist, und somit quer zur Längsrichtung der Schiene im wesentlichen nicht mehr bewegt werden kann. Eine Verschiebung in Längsrichtung der Schiene 4 bzw. 5 ist jedoch weiterhin durch einfaches verschieben möglich. Zur Abstützung dienen insbesondere zwei im Querschnitt Z-förmige Ansätze 7d, die jeweils an parallelen Innenkanten der Schiene 4 bzw. 5 angestützt sind.

Die Verankerungsorgane besitzen Führungsflächen 7g und Rastflächen 7c, welche an die federnden Rastzungen 1c angepasst sind und die eine einfache und schnelle als auch sichere Rastverbindung der Verankerungsorgane 6 bzw. 7 mit den Verbindungsstücken 1 bzw. 2 ermöglichen. Die Führungsflächen 7g sind so angeordnet, dass in der Darstellung nach Fig. 3 die Rastzungen 1c von unten in das Verankerungsorgan 7 eingeschoben werden kann, wobei die Zungen 1c durch die Führungsflächen 7g gegeneinander gedrückt werden. Nach einer gewissen Annäherung des Verbindungsstückes 1 bzw. 2 am Verankerungsstück wird die Raststellung durch eine Spreizung der Zungen 1c selbsttätig hergestellt. In der Raststellung sind die Rastflächen 7c, 1f der Zungen 1c im Eingriff.

In der genannten Raststellung liegt ein Kragen 1a an der Schiene 5 an, so dass eine weitere Bewegung des Verbindungsstückes 1 quer zur Schiene in beiden Richtungen nicht mehr möglich ist. Seitenteile 1b greifen in der Raststellung ebenfalls in das Verankerungsorgan 7 ein und stabilisieren das Verbindungsstück 1 bzw. 2 zusätzlich.

Nachfolgend wird das Anbringen der erfindungsgemässen Vorrichtung an den beiden Schienen 4 und 5 näher erläutert. Zunächst werden die Verankerungsorgane 6 und 7 in die Schienen 4 und 5 eingesetzt und in den Schienen verschoben bis sie in der gewünschten Position einander gegenüber liegen. Nun werden die Verbindungsstücke 1 und 2 jeweils durch den Schlitz 13 in die Verankerungsorgane 6 und 7 eingeschoben und in die Raststellung gebracht, wobei eines der Verbindungsstücke die Klammer 3 trägt. Diese Klammer 3 wird nun verschoben, bis sie die beiden Schäfte 1e und 2e wie in Fig. 1 gezeigt zusammen hält. Hierbei greifen Riffelungen 1d an den Innenseiten der Schäfte 1e und 2e ineinander, so dass eine weitere Längsverschiebung dieser Schäfte gegeneinander nicht mehr möglich ist. Bei der fertigen Verbindung drücken die Rastzungen 1c die Teile 7a und 7b der Verbindungsstücke auseinander und gegen Innenflächen der Schienen 5 bzw. 4, so dass die erfindungsgemässe Vorrichtung auch in Längsrichtung der Schienen kaum mehr möglich ist. Wie ersichtlich wird die Montage ohne Werkzeuge durchgeführt.

Bei der Ausführung gemäss den Fig. 4 und 5 sind ebenfalls zwei völlig gleiche Verbindungsstücke 10 vorgesehen. Diese werden ebenfalls durch die in Fig. 1 gezeigte Klammer 3 zusammengehalten. Bei dieser Ausführung sind jedoch separate Verankerungsorgane nicht vorgesehen. Das Verbindungsstück 10 besitzt ebenfalls einen Schaft 10g mit einer Riffelung 10a sowie einen Kragen 10b, der in der Raststellung aussenseitig an der Schiene 4 anliegt. Hier besitzt jedoch der Kragen 10b seitlich neben dem Schaft 10g eine durchgehende Oeffnung 10a, durch welche ein Keil 10e hindurch und zwischen zwei Teile 10c geschoben werden kann. Diese Teile 10c werden von einer C-förmigen Metallklammer 8 federnd zusammengehalten. Sowohl die Feder 8 als auch die Teile 10c sind in einem am Kragen 10b vorne angeformten Ansatz 10f untergebracht.

Um die Verbindung zwischen der Schiene 4 und dem Verbindungsstück 10 herzustellen, wird der Ansatz 10f durch den Schlitz 13 in die Schiene 4 eingeschoben, bis der Kragen 10b aussenseitig an der Schiene 4 anliegt und die in Fig. 4 gezeigte Position erreicht ist. Nun wird der Keil 10e durch die Oeffnung 10h hindurchgeschoben und dadurch die beiden Teile 10c gegen die rückstellende Kraft der Feder 8 auseinander getrieben, so dass die in Fig. 5 gezeigte Anordnung erreicht wird. Wie ersichtlich, liegen die Teile 10c in der gespreizten Position innenseitig an der Schiene 4 an. Ebenfalls liegt der Ansatz 10f an seinem Umfang innenseitig an der Schiene 4 an, so dass das verriegelte Verbindungsstück 10 im wesentlichen nicht mehr bewegt werden kann.

Aus den obigen Angaben ergibt sich somit eine Vorrichtung zum Verbinden von Schienen, die ohne Werkzeuge schnell und einfach montiert werden kann und die trotzdem eine sehr stabile und formschlüssige Verbindung ergibt. Die Vorrichtung kann weitgehend aus Kunststoff hergestellt werden, womit eine Vermeidung von Körperschallübertragungen und damit eine Verminderung des Schallpegels erreicht werden kann. Dies ist besonders bei der Vorwandinstallation von Versorgungsleitungen, Abwasserleitungen und Spülkästen besonders wichtig und wird seit langem angestrebt.

## Patentansprüche

1. Verbindung von im Abstand zueinander angeordneten und im Querschnitt etwa C-förmigen Schienen (4,5), insbesondere Montageschienen einer Unterkonstruktion eines lnstallationsschachtes, mit zwei Verbindungsstücken (1,2), die jeweils mit einem Ende in eine Schiene (4,5) eingreifen und mit Verbindungsmitteln (3), mit denen die beiden Stücke (1,2) lösbar und zur Anpassung an den Abstand der Schienen in Längsrichtung verstellbar miteinander verbunden sind, dadurch gekennzeichnet, dass die Verbindungsstücke (1,2) jeweils einen Schaft (1e,2e) und an dem in die Schiene (4,5) eingreifenden Ende einen Kragen (1a,10b) aufweisen, der an der Aussenseite der Schiene (4,5) anliegt und dass die Verbindungsstücke (1,2) jeweils vor diesem Kragen (1a,10b) spreizbare oder federnd auslenkbare Teile (1c,10c) aufweisen, die flächig innenseitig an der C-förmigen Schiene (4,5) anliegen und die zum Einsetzen des Verbindungsstücks (1,2) quer zur Längsrichtung der Schiene (4,5) federnd auslenkbar oder versetzbar sind.

2. Verbindung nach Anspruch 1, dadurch gekennzeichnet, dass die Verbindungsstücke (1,2) an den in die Schienen eingesetzten Enden federnde Rastzungen (1c) aufweisen, die mit entsprechenden Rastflächen (7c) innerhalb der Schienen (4,5) zusammenarbeiten.

3. Verbindung nach Anspruch 2, dadurch gekennzeichnet, dass in die Schienen (4,5) Verankerungsorgane (6,7) eingesetzt sind, die jeweils mit einem Verbindungsstück (1,2) zusammenarbeiten und die auf den Innenseiten der Schienen (4,5) flächig abgestützt sind.

4. Verbindung nach Anspruch 3, dadurch gekennzeichnet, dass die Verankerungsorgane (6,7) jeweils aus mehreren lösbar miteinander verbundenen Teilen (7a,7b) bestehen.

5. Verbindung nach Anspruch 1, dadurch gekennzeichnet, dass die Verbindungsstücke (10) jeweils einen Keil (10e) aufweisen, der zwischen zwei spreizbare Teile (10c,10d) geschoben ist und der die genannten beiden Teile quer zur Längsrichtung der Schienen (4,5) auseinander hält.

6. Verbindung nach Anspruch 5, dadurch gekennzeichnet, dass die Verbindungsstücke (10) eine Klammer (8) aufweisen, welche die beiden Teile (10c,10d) zusammenhält.

7. Verbindung nach einem der Ansprüche 1 bis 6, dadurch gekennzeichnet, dass der Kragen (1a,10b) jeweils flächig an der Aussenseite der entsprechenden Schiene (4,5) gestützt ist.

8. Verbindung nach einem der Ansprüche 1 bis 7, dadurch gekennzeichnet, dass die Verbindungsstücke (1,2,10) jeweils am Schaft (1e,10g) eine Riffelung (1d,10a) aufweisen, die sich im wesentlichen über die ganze Länge des Schaftes (1e,10g) aufgesetzt ist, mit der die beiden Verbindungsstücke (1,2,10) unter gegenseitigem Eingriff der Riffelungen (1d,10a) verbunden sind.

9. Verbindung nach einem der Ansprüche 1 bis 8, dadurch gekennzeichnet, dass die Verbindungsstücke (1,2,10) aus Kunststoff hergestellt sind.

## Claims

1. Connection for rails (4, 5) disposed at a distance from one another and having an approximately C-shaped cross-section, particularly mounting rails of a sub-structure of a services shaft, comprising two connecting parts (1, 2), each of which engages at one end in a rail (4, 5), and comprising connections means (3) by which the two parts (1, 2) are connected together detachably and with longitudinal adjustability for adaptation to the spacing of the rails, characterised in that the connecting parts (1, 2) each comprise a stem (1e, 2e) and, at the end engaging in the rail (4, 5), a collar (1a, 10b) which bears against the outside of the rail (4, 5), and in that the connecting parts (1, 2) are each provided, in front of said collar (1a, 10b), with expandable or resiliently deflectable parts (1c, 10c) which lie flat on the inside against the C-shaped rail (4, 5) and which for the purpose of inserting the connecting part (1, 2) are resiliently deflectable or displaceable transversely to the longitudinal direction of the rail (4, 5).

2. Connection according to Claim 1, characterised in that at their ends inserted into the rails the connecting parts (1, 2) are provided with spring catch tongues (1c) cooperating with corresponding catch surfaces (7c) inside the rails (4, 5).

3. Connection according to Claim 2, characterised in that anchoring members (6, 7) are inserted into the rails (4, 5), each of which members cooperates with a connecting part (1, 2) and is supported flat on the insides of the rails (4, 5)

4. Connection according to Claim 3, characterised in that the anchoring members (6, 7) each consist of a plurality of parts (7a, 7b) detachably connected together.

5. Connection according to Claim 1, characterised in that the connecting parts (10) each have a wedge (10e) which is pushed between two expandable parts (10c, 10d) and which holds said two parts apart trans-versely to the longitudinal direction of the rails (4, 5).

6. Connection according to Claim 5, characterised in that the connecting parts (10) are provided with a clip (8) which holds the two parts (10c, 10d) together.

7. Connection according to one of Claims 1 to 6, characterised in that the collar (1a, 10b) is in each case supported flat against the outside of the corresponding rail (4, 5).

8. Connection according to one of Claims 1 to 7, characterised in that the connecting parts (1, 2, 10) are each provided on the stem (1e, 10g) with fluting (1d, 10a) which extends substantially over the entire length of the stem (1e, 10g) and by which the two connecting parts (1, 2, 10) are connected through inter engagement of the flutings (1d, 10a).

9. Connection according to one of Claims 1 to 8, characterised in that the connecting parts (1, 2, 10) are made of plastics material.

## Revendications

1. Connexion de rails (4, 5) disposés à distance entre eux et à section approximativement en forme de C, notamment de rails de montage d'une infrastructure d'un puits d'installation, avec deux éléments de connexion (1, 2), qui s'engagent chacun par une extrémité dans un rail (4, 5), et avec des moyens de connexion (3), par lesquels les deux éléments (1, 2) sont mutuellement assemblés de manière amovible et avec possibilité de réglage dans le sens longitudinal afin de s'adapter à la distance entre les rails, **caractérisée** en ce que les éléments de connexion (1, 2) présentent chacun un corps (1e, 2e) et un collet (1a, 10b) à l'extrémité s'engageant dans le rail (4, 5), collet qui s'applique contre le côté extérieur du rail (4, 5), et en ce que les éléments de connexion (1, 2) présentent chacun, avant ce collet (1a, 10b), des parties écartables ou élastiquement déviables (1c, 10c), qui s'appliquent à plat sur le côté intérieur contre le rail en forme de C (4, 5) et qui, afin d'insérer l'élément de connexion (1, 2), peuvent être élastiquement déviés ou déplacés transversalement à la direction longitudinale du rail (4, 5).

2. Connexion selon la revendication 1, **caractérisée** en ce que les éléments de connexion (1, 2) présentent, aux extrémités insérées dans les rails, des languettes d'arrêt élastiques (1c), qui coopèrent avec des surfaces d'arrêt correspondantes (7c) à l'intérieur des rails (4, 5).

3. Connexion selon la revendication 2, **caractérisée** en ce que des organes d'ancrage (6, 7) sont insérés dans les rails (4, 5), organes qui coopèrent chacun avec un élément de connexion (1, 2) et qui s'appuient à plat sur les côtés intérieurs des rails (4, 5).

4. Connexion selon la revendication 3, **caractérisée** en ce que les organes d'ancrage (6, 7) sont chacun constitués de plusieurs parties (7a, 7b) mutuellement assemblées de manière amovible.

5. Connexion selon la revendication 1, **caractérisée** en ce que les éléments de connexion (10) présentent chacun un coin (10e), qui est enfoncé entre deux parties écartables (10c ) et qui maintient ces parties écartées transversalement à la direction longitudinale des rails (4, 5).

6. Connexion selon la revendication 5, **caractérisée** en ce que les éléments de connexion (10) présentent une attache (8), qui maintient ensemble les deux parties (10c).

7. Connexion selon l'une quelconque des revendications 1 à 6, **caractérisée** en ce que le collet (1a, 10b) est chaque fois appuyé à plat contre le côté extérieur du rail correspondant (4, 5).

8. Connexion selon l'une quelconque des revendications 1 à 7, **caractérisée** en ce que les éléments de connexion (1, 2, 10) présentent chacun, sur le corps (1e, 10g), un striage (1d, 10a), qui est réalisé sensiblement sur toute la longueur du corps (1e, 10g) par lequel les deux éléments de connexion (1, 2, 10) sont assemblés sous l'engagement mutuel de leurs striages (1d, 10a).

9. Connexion selon l'une quelconque des revendications 1 à 8, **caractérisée** en ce que les éléments de connexion (1, 2, 10) sont réalisés en matière plastique.
